# FASCICULE DE BREVET EUROPEEN

(11) **EP 3 384 343 B1**
(45) Date de publication et mention de la délivrance du brevet: **11.08.2021**
(21) Numéro de dépôt: 16790334.3
(22) Date de dépôt: 01.11.2016
(51) Int. Cl.: G02F 1/01, C09K 9/02, B32B 27/20, G04B 47/00

(54) **ELEMENT D'HABILLAGE AVEC CAPTEUR DE TEMPERATURE**
VERKLEIDUNGSELEMENT MIT TEMPERATURSENSOR
CLADDING ELEMENT WITH TEMPERATURE SENSOR

(30) Priorité: 30.11.2015 EP 15197047
(43) Date de publication de la demande: 10.10.2018
(73) Titulaire: The Swatch Group Research and Development Ltd, 2074 Marin (CH)
(72) Inventeur: FRANÇOIS, Nicolas, 2000 Neuchâtel (CH)
(74) Mandataire: ICB SA
(86) Numéro de dépôt international: PCT/EP2016/076302
(87) Numéro de publication internationale: WO 2017/092944

(56) Documents cités:
- WO-A1-01/02168
- US-A- 5 430 692
- US-A- 5 688 592
- US-A1- 2012 045 952
- US-A1- 2015 122 774

## Description

La présente invention est relative à un élément thermo-chromique comprenant une couche thermo-chromique composée d'un liant et d'un pigment thermo-chromique choisi pour réagir à une température spécifique de sorte que ledit pigment passe d'une première couleur à une seconde couleur lorsque ladite température spécifique est atteinte.

### ARRIERE PLAN TECHNOLOGIQUE

Il est connu des objets portables comme des bracelets qui utilisent des pigments thermo-chromiques pour des applications de type capteur de température ou des applications purement décoratives. Une technologie utilisée est la technologie Leuco. Le fonctionnement des systèmes Leuco est maintenu bien connu et largement utilisé dans les encres et les peintures mais aussi en masse dans les plastiques ; le pigment est en fait une micro-capsule contenant trois composants : un colorant sensible au changement de pH (iono-chromisme), généralement de la classe des spyrolactone, un acide faible fonctionnant comme le développeur de couleur, il s'agit généralement du bisphenol A, et un co-solvant de la classe des acides gras à bas point de fusion, des amides ou des alcools.

C'est le point de fusion du co-solvant qui détermine le seuil de transition de la forme colorée à la forme incolore du colorant.

Un inconvénient de ce système est sa grande sensibilité aux rayons ultraviolets (UV) qui entraîne, de ce fait, une rapide dégradation du pigment si l'exposition aux rayons ultraviolets est supérieure à plus d'une dizaine d'heures en continu.

Pour résoudre ce problème, il est envisagé d'utiliser des additifs freinant la dégradation du colorant aux ultraviolets tels que des absorbeurs d'ultraviolets sur la base d'oxydes de titane, de cérium ou de zinc sont connus et il est admis qu'ils peuvent être utilisés dans la formulation de la peinture ou de l'encre thermo-chromique.

Néanmoins, l'inconvénient de ces absorbeurs d'ultraviolets est qu'ils ont un indice de réfraction élevé et donc un fort pouvoir de diffusion de la lumière résultant en une opacification du système.

Une variante connue est l'utilisation de particules submicroniques et la bonne dispersion de celles-ci permettant d'améliorer les qualités optiques.

Une autre alternative est l'utilisation de particules organiques de type phénoliques telles l'hydoxybenzophenone ou la lignine.

L'usage de tous ces additifs complexifie la formulation et perturbe l'atteinte d'un bon résultat fonctionnel, esthétique et résistant.

Une dernière alternative consiste en l'utilisation de nanoparticules composées de complexes à transition de spin. L'effet thermo-chromique de ces nanoparticules est décrit dans la demande de brevet US2008/0311401. Elles présentent de plus une bonne stabilité aux ultraviolets. Certaines nanoparticules présentent toutefois, suivant les complexes utilisés, l'inconvénient d'un effet mémoire plus ou moins important ce qui ne permet pas, pour une application capteur de température, une indication fiable de la température.

Le document GB 2 135 081 A divulgue: Elément d'habillage ("dise" 10) d'une pièce d'horlogerie (fig.1, abrégé) comprenant une armature réalisée en un premier matériau, ledit élément d'habillage comprenant en outre au moins un élément thermo-chromique réagissant aux variations de température.

### RESUME DE L'INVENTION

L'invention concerne un élément d'habillage d'une pièce d'horlogerie qui pallie les inconvénients susmentionnés de l'art antérieur en proposant un objet portable capable de fournir une indication de changement de température de manière lisible et fiable.

A cet effet, l'invention consiste en un élément thermo-chromique comprenant une couche thermo-chromique composée d'un liant et d'un pigment thermo-chromique choisi pour réagir à une température spécifique de sorte que ledit pigment passe d'une première couleur à une seconde couleur lorsque ladite température spécifique est atteinte, caractérisé en ce que l'élément thermo-chromique comprend en outre une couche de support sur laquelle la couche thermo-chromique est déposée et une couche de protection résistante aux rayons ultraviolet recouvrant la couche thermo-chromique et la couche de support.

Cette invention permet d'avoir la couche thermo-chromique qui est protégée des UV par la couche de protection mais qui présente une bonne réactivité aux changements de température via la couche de support.

Dans un premier mode de réalisation avantageux, la couche de support a une conductivité thermique supérieure à 100 W.m⁻¹.K⁻¹. Cette couche permet d'avoir une bonne réactivité pour le changement de couleur lors d'une variation de température.

Dans un second mode de réalisation avantageux, la couche thermo-chromique est du type laque dure constituée d'un liant dans lequel le pigment est mélangé, ce liant étant choisi dans la famille des acryliques, des copolymères d'acryliques ou des polyuréthanes, un dispersant du type sel d'acide polycarboxilique, un plastifiant du type benzoate, un solvant choisi dans la famille des glycols ou esters.

Dans un troisième mode de réalisation avantageux, la couche thermo-chromique (11) est du type laque souple constituée d'un liant dans lequel le pigment est mélangé, ledit liant étant choisi dans la famille des silicones ou des polyuréthanes.

Dans un quatrième mode de réalisation avantageux, la couche thermo-chromique est du type encre constituée d'un liant choisi dans la famille des acryliques ou des polyuréthanes ou des silicones; d'un dispersant ou agent anti-floculant du type sel d'acide polycarboxilique, d'un plastifiant et promoteur d'adhésion de type sulfonamide et d'un solvant choisi dans la famille des glycols ou esters.

Dans un cinquième mode de réalisation avantageux, la couche de protection est choisie dans la liste comprenant : le saphir, l'acrylique chargée en nano diamant et graphène sous forme de laque ou autre, une couche mince de nano-diamant,.

Dans un autre mode de réalisation avantageux, la couche de protection présente une conductivité thermique au moins supérieure à 10 W.m⁻¹.K⁻¹.

Dans un autre mode de réalisation avantageux, la couche de support est réalisée dans un matériau sous forme de couche mince, de feuilles ou massif choisi dans la liste comprenant : l'aluminium anodisé, le cuivre, les alliages d'or, les alliages d'argent, les alliages aluminium /carbure de silicium, les couches minces de nano-diamants, les couches minces de graphite ou du graphène.

Dans un autre mode de réalisation avantageux, l'élément thermo-chromique comprend en outre un substrat sur lequel les différentes couches sont disposées afin de former un insert.

Dans un autre mode de réalisation avantageux, l'élément thermo-chromique comprend en outre au moins une couche intermédiaire agencée sous la couche thermo-chromique.

Dans un autre mode de réalisation avantageux, la couche intermédiaire est une couche luminescente combinant pigments phosphorescents de type alcalino-terreux dopés aux lanthanides et/ou pigments et colorants fluorescents.

L'invention concerne également un élément d'habillage d'un objet portable comprenant une armature réalisée en un premier matériau, ledit élément d'habillage comprenant en outre au moins un dispositif réagissant aux variations de température, caractérisé en ce que ledit dispositif réagissant aux variations de température est formé d'au moins un élément thermo-chromique selon l'invention.

Dans un autre mode de réalisation avantageux, le dispositif réagissant aux variations de température est un capteur de température muni d'une pluralité d'éléments thermo-chromiques, chaque élément thermo-chromique réagissant à une température spécifique qui lui est propre.

Dans un autre mode de réalisation avantageux, les éléments thermo-chromiques ont tous la même première couleur.

Dans un autre mode de réalisation avantageux, les éléments thermo-chromiques ont tous la même seconde couleur.

Dans un autre mode de réalisation avantageux, les éléments thermo-chromiques sont conçus de sorte que leur seconde couleur permette un dégradé lorsqu'ils sont tous passés de la première couleur à la seconde couleur.

Dans un autre mode de réalisation avantageux, l'élément d'habillage comprend au moins une creusure agencée pour qu'au moins un élément thermo-chromique puisse s'y placer.

L'invention concerne en outre un objet portable comprenant un boitier formé par une carrure fermée par un fond et une glace, ledit objet portable comprend également un bracelet, caractérisé en ce qu'il comprend en outre au moins un élément d'habillage invention choisi dans la liste comprenant la carrure, la glace, la lunette, le cadran, le bracelet, le fermoir.

### BREVE DESCRIPTION DES FIGURES

Les avantages d'un tel élément d'habillage apparaîtront clairement à la lecture de la description qui va suivre et à l'examen des dessins qui l'illustrent à titre d'exemple et dans lesquels :
- les figures 1 et 2 représentent de manière schématique une pièce d'horlogerie selon la présente invention ;
- les figures 3 et 4 représentent de manière schématique un élément thermo-chromique selon la présente invention ;
- la figure 5 représente de manière schématique un premier mode d'exécution selon la présente invention ;
- la figure 6 représente de manière schématique un second mode d'exécution selon la présente invention ;
- la figure 7 représente de manière schématique une variante du premier mode d'exécution de l'élément thermo-chromique selon la présente invention ;
- la figure 8 représente de manière schématique une variante du second mode d'exécution de l'élément thermo-chromique selon la présente invention ;
- les figures 9 à 16 représentent un capteur de température et ses variantes utilisant l'élément thermo-chromique selon la présente invention ;

### DESCRIPTION DETAILLEE

La présente invention concerne un élément d'habillage 1 d'une pièce d'horlogerie ou montre 100.

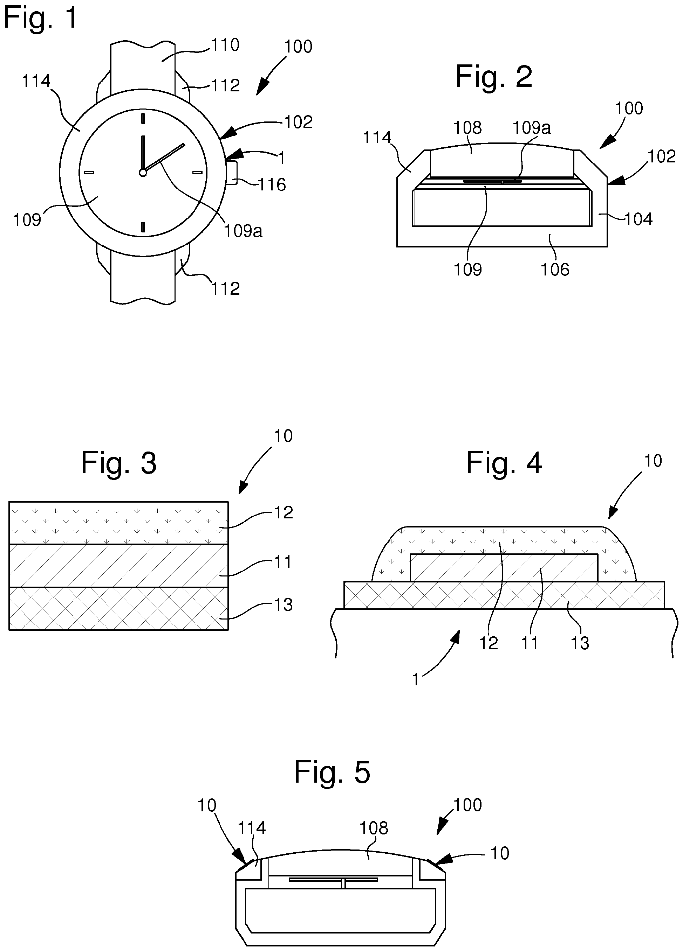

La pièce d'horlogerie 100, visible aux figures 1 et 2, est par exemple une montre bracelet et comprend un boitier 102. Ce boitier est formé par une carrure 104 fermée par un fond 106 et une glace 108 voir une lunette 114. La pièce d'horlogerie peut comprendre un cadran 109 et des moyens d'affichage 109a. La pièce d'horlogerie comprend également des moyens de commande 116. La pièce d'horlogerie comprend également un bracelet 110. Ce dernier est fixé à la carrure via deux paires de cornes 112. Le bracelet peut être constitué de deux brins, chaque brin étant fixé à une paire de cornes et relié à l'autre brin via un fermoir.

Cet élément d'habillage peut être par exemple un bracelet 110, une carrure 104, une lunette 114, une glace 108, un poussoir ou une couronne 116, un cadran 109 de la pièce d'horlogerie. Cet élément d'habillage peut être réalisé en un matériau métallique ou céramique ou de type plastique.

Cet élément d'habillage 1 est agencé pour porter un élément thermo-chromique 10. Un tel élément thermo-chromique 10 est un élément apte à changer de couleur en fonction de la température. Un élément thermo-chromique 10 comprend en général un pigment thermo-chromique qui réagit à la température pour voir sa coloration être modifiée.

Avantageusement selon l'invention, l'élément thermo-chromique 10 est composé d'au moins trois composés différents, se présentant sous la forme de couches et superposées les unes aux autres comme visibles aux figures 3 et 4. Ces au moins trois composés sont utilisés afin d'obtenir un élément thermo-chromique doté d'une bonne durée de vie et d'une bonne efficacité.

Le premier composé est un composé appelé A qui se caractérise comme se présentant sous la forme d'une couche thermo-chromique 11. Cette couche thermo-chromique 11 est composé de pigments thermo-chromiques tels qu'un pigment dit leuco c'est-à-dire une microcapsule contenant un colorant sensible au changement de pH (iono-chromisme), généralement de la classe des spyrolactones, un acide faible fonctionnant comme le développeur de couleur, généralement du bisphenol A, et un co-solvant de la classe des acides gras à bas points de fusion, généralement des amides ou des alcools.

Il pourra également s'agir d'un pigment utilisant la technologie à transition de spin.

Le second composé est un composé appelé B qui se caractérise comme étant une couche de protection 12. Une telle couche de protection 12 consiste en une couche résistante au moins aux rayons ultraviolets. Cette couche, transparente, peut être une couche faite d'acrylique chargé en nano-diamant et/ou graphène offrant une bonne transparence et une conductivité thermique améliorée ou une couche mince de nano-diamant.

Préférentiellement, cette couche de composé B présente une conductivité thermique supérieure à 10 W.m-1.K-1.

L'épaisseur de cette couche de composé B varie entre 10µm et 0.1 mm.

Cet agencement avantageux permet de protéger le composé A, c'est-à-dire le composé comprenant le pigment thermo-chromique, des rayons ultraviolets et donc d'améliorer la longévité de l'élément thermo-chromique puisque la couche de composé B absorbera une partie des rayons ultraviolets.

Le troisième composé appelé composé C se présente sous la forme d'une couche de support 13 ayant une conductivité thermique au moins supérieure à 100 W.m⁻¹.K⁻¹. La couche de support 13 formée par le composé s'est alors déposée entre l'élément d'habillage 1 et la couche 11 de composé A contenant les pigments thermo-chromiques, ce composé A étant recouvert par le composé B. On précise que le film formé par cette couche C a une surface légèrement plus grande que les films formés par les composés A et B, cela afin que la couche conductrice soit en contact direct avec le milieu extérieur et qu'elle puisse conduire avec la plus grande efficacité les variations de températures subies.

Ce composé C peut être choisi comme étant transparent ou opaque selon le matériau de l'élément d'habillage. En effet, pour un élément d'habillage comme une glace, c'est-à-dire transparent, un composé C transparent sera utilisé.

Pour ce composé C, on choisira un matériau de la liste suivante : aluminium anodisé, or, argent ou un de leurs alliages, couche mince de nano diamants déposée par exemple par un procédé sol-gel.

L'épaisseur de cette couche 13 de composé C varie entre 10µm et 5 mm de sorte à permettre une transmission énergétique plus ou moins grande et/ou rapide.

Cette couche 13 réalisée avec le composé C est utilisée afin de conduire thermiquement la chaleur de l'élément d'habillage et donc pour permettre une bonne réactivité dans le changement de couleur de l'élément thermo-chromique de la couche A.

Dans un premier mode d'exécution, l'élément thermo-chromique 10 est réalisé par superposition de couches. Pour cela, les différentes couches 11, 12, 13 de composés respectifs A, B et C se présentent sous la forme de couches d'épaisseur de 10 à 100mu de sorte que l'élément thermo-chromique se présente sous la forme d'une sérigraphie comme visible à la figure 5.

A ce titre, la couche de composé A, qui est la couche contenant les pigments thermo-chromiques peut être une couche déposée de manière uniforme par sprayage ou trempage ou sérigraphie ou tamponnage.

La couche de composé B, qui est la couche protectrice est une couche déposée par des méthodes de sérigraphie, de tamponnage ou par des méthodes de sprayage ou trempage pour obtenir une couche homogène. Selon une première forme, la couche de composé B sera du type laque dure et sera constituée d'un liant dans lequel les agents anti-UV et autres additifs sont mélangés, ce liant pouvant être issu de la famille des acryliques ou des copolymères d'acryliques pour une haute résistance aux rayures et aux UV ou un liant polyuréthane pour une haute résistance à l'abrasion, un dispersant du type sel d'acide polycarboxilique, un plastifiant du type benzoate, un solvant de type glycol ou ester et d'autres additifs comme agents anti-UV pour le polyuréthane afin d'éviter des dégradation du polymère, ou des agents de toucher (cires, paraffines...) permettant d'améliorer les propriétés haptiques.

Selon une seconde forme, la couche de composé B sera du type laque souple et sera constituée d'un liant dans lequel les agents anti-UV et autres additifs sont mélangés. Ce liant peut être issu de la famille des silicones ou des polyuréthanes.

Selon une troisième forme, la couche de composé B sera du type encre et sera constituée d'un liant de la famille des acryliques pour une haute résistance aux UV et une haute transparence ou de la famille des polyuréthanes pour une haute résistance à l'abrasion ou encore une encre silicone pour des substrats souples; d'un dispersant ou agent anti-floculant du type sel d'acide polycarboxilique, d'un plastifiant et promoteur d'adhésion de type sulfonamide et d'un solvant de type glycol ou ester.

La couche de composé C qui est la couche permettant une meilleure conductivité thermique, peut être une couche mince de nano-diamants déposée par sol-gel ou une couche mince de cuivre, d'or ou d'argent, de carbone ou similaire déposée par un traitement PVD ou PECVD.

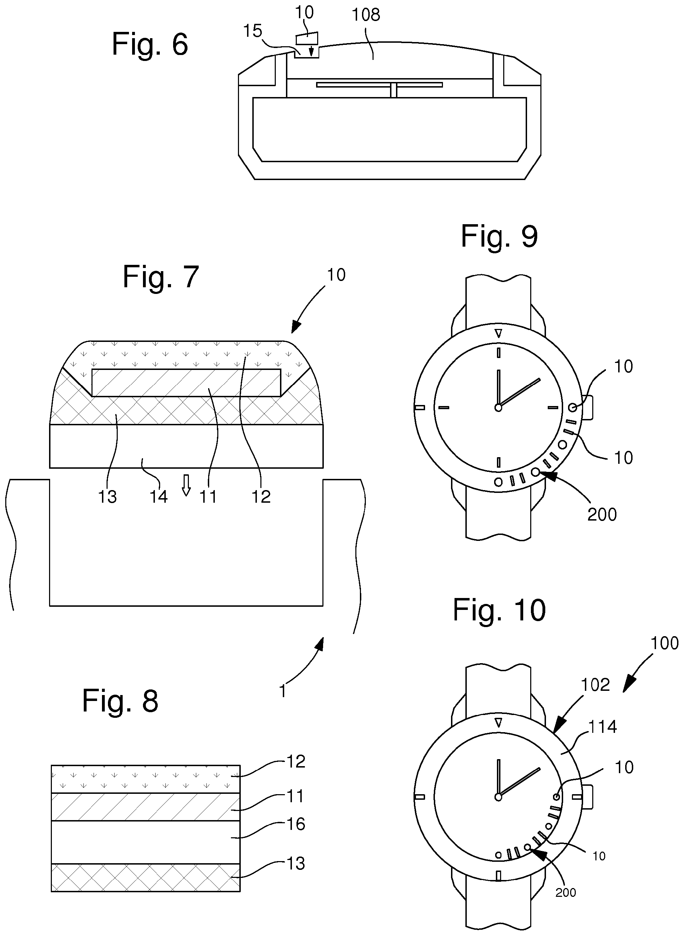

Dans un second mode d'exécution, l'élément thermo-chromique 10 est réalisé par superposition de couches pour former une pastille insert comme visible à la figure 6. Pour cela, les différentes couches de composé A, B se présentent sous la forme de couches dites épaisses c'est-à-dire que les couches se supportent elles-mêmes au contraire d'une encre ou d'une laque qui doit être déposée sur un substrat. La couche C pourra être épaisse ou mince.

A ce titre, la couche de composé A se présente alors sous la forme d'un matériau souple ou dur. Elle est assemblée par surmoulage, collage, rivetage, vissage ou tout autre moyen mécanico-chimique avec les autres couches. Elle est réalisée par injection ou surmoulage. La couche peut être du type thermoplastique comme par exemple une résine de type acrylonitrile butadiene styrene, Polyamide ou Polymetacrylate de méthyl thermodurcissable comme une résine époxy ou acrylique, ou élastomère thermoplastique comme, par exemple, une résine de type polyuréthane. Cette résine sera préalablement mélangée avec les pigments thermo-chromiques ainsi qu'un agent dispersant et compatibilisant de type copolymères modifiés/greffés, un plastifiant de type benzoate ou sulfonamide.

La couche peut également être du type élastomère vulcanisé, par injection surmoulage ou compression, comme par exemple une résine élastomère de type nitrile butadiène ou nitrile butadiène hydrogéné ou fluoropolymère élastomère, ou silicone, un procédé de vulcanisation adapté à la résine sélectionnée utilisant des éléments supplémentaires comme du souffre et des accélérateurs de vulcanisations type thiurams ou peroxydes et ses dérivés, des agents de couplages éventuels (type silanes).

Pour la couche de composé C, on peut envisager qu'elle se présente sous la forme d'un alliage métallique de grande conductivité thermique (alliage de cuivre par exemple). Dans ce cas, ce composé C sera assemblé avec les autres couches. On peut aussi envisager que le composé C soit réalisé par traitement plasma sur les surfaces inférieures et longitudinales.

Un avantage de ce mode d'exécution est qu'il permet d'avoir des éléments thermo-chromiques pouvant être usinés à la forme finale du capteur de température. Ils sont facilement manipulables et peuvent être rapportés à des composants par assemblage.

Ce mode d'exécution peut être associé à des creusures 15 agencées sur l'élément d'habillage 10, ces creusures 15 servant de logement pour les éléments thermo-chromiques 10 sous forme d'inserts.

Dans une variante du premier mode d'exécution, il peut être prévu que les différentes couches de l'élément thermo-chromique soient déposées sur un support 14 comme visible à la figure 7, ce support 14 étant ensuite placé dans une creusure de l'élément d'habillage servant de logement.

Dans une variante des premier et second modes d'exécution, il peut être envisagé que l'élément thermo-chromique soit composé d'un mélange de couches minces et de couches épaisses. A ce titre, il est possible que les couches de composé A et de composé C soient des couches dites épaisses. Cette configuration permet d'avoir les couches des composés A et C formant une sorte de coque enfermant le composé thermo-chromique.

Un autre exemple consisterait à avoir la couche de composé C se présentant sous la forme d'une couche épaisse sur laquelle les couches de composé A et de composé B sont agencées. Ces couches de composé B et de composé A sont des couches dites minces. Cela permet d'avoir un élément thermo-chromique plus facile à manipuler qu'un élément thermo-chromique réalisé uniquement avec des couches minces.

Dans une variante des premier et second modes d'exécution, il peut être prévu qu'au moins une couche intermédiaire 16 est agencée entre la couche de composé A et la couche de composé C comme visible à la figure 8. Une telle couche 16 peut être utilisée pour obtenir un effet supplémentaire. Un exemple avantageux est l'utilisation d'une couche luminescente, phosphorescente ou fluorescente, afin d'apporter une lisibilité en cas de faible exposition lumineuse.

Bien entendu, il peut être prévu d'avoir d'autres types de couches intermédiaires comme une couche nacrée, métallisée ou colorée afin de fournir un effet supplémentaire.

Cet élément thermo-chromique 10 est alors utilisé dans différentes applications. Une première application consiste en un capteur de température 200 qui permet la visualisation d'une échelle de température. Pour cela, le capteur de température 200 comprend une pluralité d'éléments thermo-chromiques 10, chacun d'entre eux comprenant un pigment réagissant à une température spécifique. Par conséquent, chaque élément thermo-chromique 10 change de couleur lorsqu'une température spécifique est atteinte.

Pour avoir une échelle de température, il sera fait en sorte que les températures spécifiques des éléments thermo-chromiques 10 soient croissantes ou décroissantes. Ainsi, lorsque l'utilisateur portant l'objet portable subit des variations de températures, les éléments thermo-chromiques 10 changent de couleur au fur et à mesure permettant une indication visuelle simple à interpréter. Ces éléments thermo-chromiques 10 peuvent être collés les uns aux autres ou espacés.

Dans une variante préférée, les différents éléments thermo-chromiques 10 composant l'échelle de température présentent tous une première couleur, c'est à dire une couleur au repos, identique. On comprend par là qu'à une température de référence, tous les éléments thermo-chromiques 10 ont la même couleur.

Dans une autre variante préférée, les différents éléments thermo-chromiques 10 composant l'échelle de température présentent tous une seconde couleur, c'est à dire une couleur lorsque leur seuil spécifique est atteint, identique. On comprend par là qu'à la température maximale mesurable, tous les éléments thermo-chromiques 10 auront la même couleur.

Dans une autre variante préférée, les différents éléments thermo-chromiques 10 composant l'échelle de température présentent tous une première couleur identique mais sont réalisés pour qu'ils n'aient pas tous une seconde couleur identique afin de permettre un dégradé. Plus précisément, les éléments thermo-chromiques 10 sont conçus pour que, lorsqu'ils forment une échelle de température, les éléments thermo-chromiques 10 changeant de couleur les premiers ont une seconde couleur plus claire que les éléments thermo-chromiques 10 changeant de couleur en dernier. Par exemple, les premiers éléments thermo-chromiques 10 deviennent jaunes et les derniers deviennent rouges. Cela permet une indication double : non seulement l'utilisateur sait que la température augmente car le nombre d'éléments thermo-chromiques 10 changeant de couleur augmente mais il sait également qu'il se rapproche d'une température maximale car la couleur varie et devient de plus en plus foncée.

On comprendra donc ici que le pigment thermo-chromique est du type réversible. Cela signifie que lorsque le pigment atteint ou dépasse un seuil de température spécifique, il change de couleur passant d'une première couleur à une seconde couleur. Mais cela signifie aussi que lorsque la température repasse en dessous du seuil spécifique, le pigment repasse de la seconde couleur vers la première couleur.

Il pourra être prévu que les éléments thermo-chromiques du capteur de température soient agencés sur la lunette ou la glace de la montre et s'étendent sur la lunette selon un arc de cercle allant de la position 3H du tour d'heure à la position 6H du tour d'heure ou de la position 9H du tour d'heure à la position 12H du tour d'heure comme visible aux figures 9 et 10.

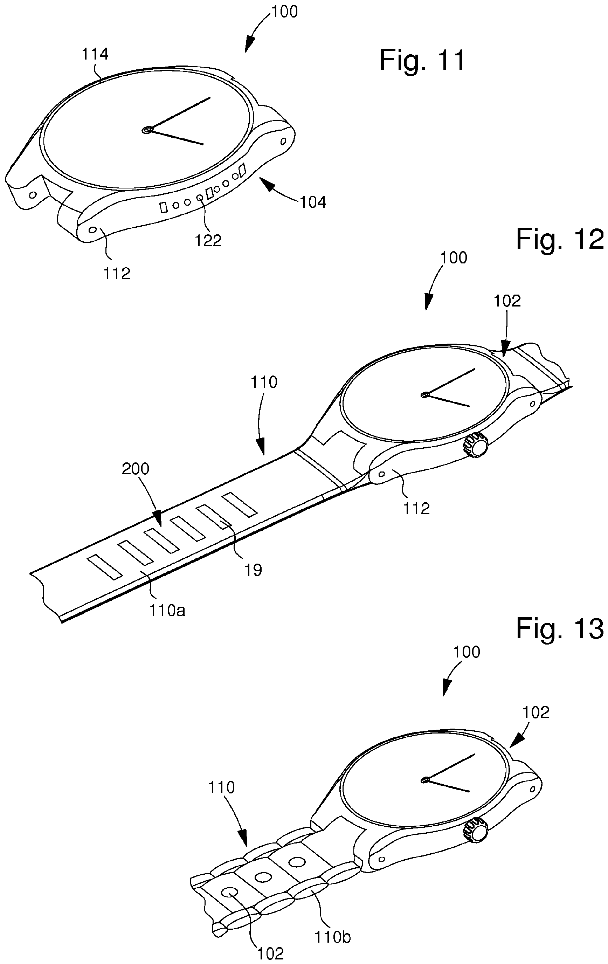

Il est également possible que le capteur de température s'étende sur la carrure comme visible sur la figure 11 ou le bracelet de la montre comme visible aux figures 12 à 16.

Dans un premier cas visible à la figure 12, le bracelet 110 est constitué de deux brins 110a de bracelet, chaque brin étant fixé à une paire de cornes 112 et relié à l'autre brin via un fermoir 111. Préférentiellement, les brins 110a de bracelet sont réalisés en caoutchouc ou plastique.

Dans un second cas visible à la figure 13, le bracelet est en métal ou en céramique et est alors constitué d'une pluralité de maillons 110b attachés les uns aux autres par l'intermédiaire de goupilles. Cela permet d'avoir des maillons 110b qui peuvent pivoter les uns par rapport aux autres.

Dans les deux cas, les éléments thermo-chromiques peuvent être sérigraphiés ou se présenter sous la forme d'inserts et être agencés dans des creusures sur le bracelet.

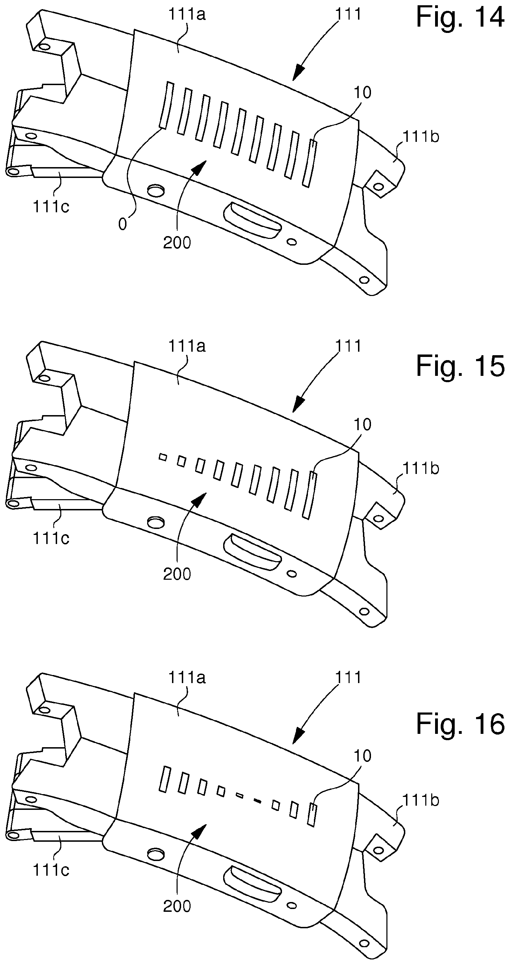

Dans un autre cas visible aux figures 14 à 16, l'élément d'habillage est le fermoir 111 c'est-à-dire la boucle déployante du bracelet. Une telle boucle déployante est composée généralement de trois parties 111a, 111b, 111c comme des longerons articulés les uns par rapport aux autres. Deux de ces parties sont fixées à un maillon ou à un brin. Ces parties composant la boucle déployante 111 sont alors conçues pour s'articuler de sorte qu'elles puissent s'empiler, ces trois parties 111a, 111b, 111c n'en faisant alors qu'une. Cette configuration permet d'agrandir la longueur du bracelet momentanément pour la fixation au poignet de l'utilisateur.

Pour certains modèles de boucle déployante, une des parties fait office de pièce principale 111a car c'est cette partie qui accueille les deux autres parties 111b, 111c ; cette partie 111a dite principale est la partie visible de l'extérieur. De l'extérieur, l'utilisateur voit donc une partie ayant la forme d'une plaque de métal sur laquelle des indications comme le nom de la marque peuvent être gravées.

La présente invention utilise cette surface pour l'agencement du capteur de température. Les éléments thermo-chromiques 1 sont donc disposés sur cette surface de la partie centrale 111a de la boucle déployante.

## Revendications

1. Elément d'habillage (10) d'un objet portable (100) comprenant une armature réalisée en un premier matériau, ledit élément d'habillage comprenant en outre au moins dispositif réagissant aux variations de température (200), **caractérisé en ce que** ledit dispositif réagissant aux variations de température étant formé d'au moins un élément thermo-chromique comprenant une couche thermo-chromique (11) composée d'un liant et d'un pigment thermo-chromique choisi pour réagir à une température spécifique de sorte que ledit pigment passe d'une première couleur à une seconde couleur lorsque ladite température spécifique est atteinte, l'élément thermo-chromique comprenant en outre une couche de support (13) sur laquelle la couche thermo-chromique (11) est déposée et une couche de protection (12) résistante aux rayons ultraviolet recouvrant la couche thermo-chromique et la couche de support, le dispositif réagissant aux variations de température (200) est un capteur de température muni d'une pluralité d'éléments thermo-chromiques, chaque élément thermo-chromique réagissant à une température spécifique qui lui est propre.

2. Elément d'habillage selon la revendication 1, **caractérisé en ce que** la couche thermo-chromique (11) est du type laque dure constituée d'un liant dans lequel le pigment est mélangé, ce liant choisi dans la famille des acryliques, des copolymères d'acryliques ou des polyuréthanes, un dispersant du type sel d'acide polycarboxilique, un plastifiant du type benzoate, un solvant choisi dans la famille des glycols ou esters.

3. Elément d'habillage selon la revendication 1, **caractérisé en ce que** la couche thermo-chromique (11) est du type laque souple constituée d'un liant dans lequel le pigment est mélangé, ledit liant étant choisi dans la famille des silicones ou des polyuréthanes.

4. Elément d'habillage selon la revendication 1, **caractérisé en ce que** la couche thermo-chromique (11) est du type encre constituée d'un liant choisi dans la famille des acryliques ou des polyuréthanes ou des silicones, d'un dispersant ou agent anti-floculant du type sel d'acide polycarboxilique, d'un plastifiant et promoteur d'adhésion de type sulfonamide et d'un solvant choisi dans la famille des glycols ou esters.

5. Elément d'habillage selon l'une des revendications 1 à 4, **caractérisé en ce que** la couche de protection (12) est choisie dans la liste comprenant : verre saphir, verre en acrylique chargé nanodiamant et graphène, une couche mince de nanodiamant, une laque acrylique chargée avec des charges de nanodiamant et de graphène.

6. Elément d'habillage selon l'une des revendications 1 à 5, **caractérisé en ce que** la couche de protection (12) présente une conductivité thermique au moins supérieure à 10 W.m⁻¹.K⁻¹.

7. Elément d'habillage selon la revendication 2, **caractérisé en ce que** la couche de support (13) présente une conductivité thermique supérieure à 100 W.m-1.K-1.

8. Elément d'habillage selon la revendication 1, **caractérisé en ce que** la couche de support (13) est réalisée dans un matériau choisi dans la liste comprenant : l'aluminium anodisé, le cuivre, les alliages d'or, les alliages d'argent, les alliages aluminium/carbure de silicium, les couches minces de nanodiamants, les couches minces de graphite, le graphène.

9. Elément d'habillage selon l'une des revendications précédentes, **caractérisé en ce qu'**il comprend en outre un substrat (14) sur lequel les différentes couches sont disposées afin de former un insert.

10. Elément d'habillage selon l'une des revendications précédentes, **caractérisé en ce qu'**il comprend en outre au moins une couche intermédiaire(16) agencée sous la couche thermo-chromique.

11. Elément d'habillage selon l'une des revendications précédentes, **caractérisé en ce que** la couche intermédiaire (16) est une couche luminescente.

12. Elément d'habillage selon la revendication 1, **caractérisé en ce que** lesdits éléments thermo-chromiques (10) ont tous la même première couleur.

13. Elément d'habillage selon la revendication 1, **caractérisé en ce que** lesdits éléments thermo-chromiques (10) ont tous la même seconde couleur.

14. Elément d'habillage selon la revendication 1, **caractérisé en ce que** lesdits éléments thermo-chromiques (10) sont conçus de sorte que leur seconde couleur permette un dégradé lorsqu'ils sont tous passés de la première couleur à la seconde couleur.

15. Elément d'habillage selon l'une des revendications 1 à 14, **caractérisé en ce qu'**il comprend au moins une creusure (15) agencée pour qu'au moins un élément thermo-chromique (10) puisse s'y placer.

16. Objet portable comprenant un boitier (102) formé par une carrure (104) fermée par un fond (106) et une glace (108), ledit objet portable comprend également un bracelet (110), **caractérisé en ce qu'**il comprend en outre au moins un élément d'habillage selon l'une des revendication 1 à 15 choisi dans la liste comprenant la carrure, la glace, la lunette, le cadran, le bracelet, le fermoir.

## Patentansprüche

1. Verkleidungselement (10) eines tragbaren Gegenstands (100), umfassend eine aus einem ersten Material gebildete Haltevorrichtung, wobei das Verkleidungselement ferner mindestens eine auf Temperaturänderungen (200) reagierende Vorrichtung aufweist, **dadurch gekennzeichnet, dass** die auf Temperaturänderungen reagierende Vorrichtung aus mindestens einem thermochromen Element gebildet ist, das eine thermochrome Schicht (11) aufweist, die aus einem Bindemittel und einem thermochromen Pigment besteht, das so ausgewählt ist, dass es auf eine bestimmte Temperatur reagiert, so dass das Pigment von einer ersten Farbe zu einer zweiten Farbe wechselt, wenn die bestimmte Temperatur erreicht ist, wobei das thermochrome Element ferner eine Trägerschicht (13), auf der die thermochrome Schicht (11) abgeschieden ist, und eine ultraviolettbeständige Schutzschicht (12), die die thermochrome Schicht sowie die Trägerschicht abdeckt, umfasst, wobei die auf Temperaturänderungen (200) reagierende Vorrichtung ein Temperatursensor ist, der mit mehreren thermochromen Elementen versehen ist, wobei jedes thermochrome Element auf eine ihm eigene bestimmte Temperatur reagiert.

2. Verkleidungselement nach Anspruch 1, **dadurch gekennzeichnet, dass** die thermochrome Schicht (11) vom Typ Hartlack ist, bestehend aus einem Bindemittel, in das das Pigment eingemischt ist, wobei dieses Bindemittel aus der Familie der Acryle, der Acryl-Copolymere oder der Polyurethane gewählt ist, einem Dispergiermittel vom Typ Polycarbonsäuresalz, einem Weichmacher vom Typ Benzoat und einem Lösungsmittel, das aus der Familie der Glykole oder Ester ausgewählt ist.

3. Verkleidungselement nach Anspruch 1, **dadurch gekennzeichnet, dass** die thermochrome Schicht (11) vom Typ Weichlack ist und aus einem Bindemittel besteht, in das das Pigment eingemischt ist, wobei das Bindemittel aus der Familie der Silikone oder Polyurethane ausgewählt ist.

4. Verkleidungselement nach Anspruch 1, **dadurch gekennzeichnet, dass** die thermochrome Schicht (11) vom Typ Tinte ist, bestehend aus einem Bindemittel, das aus der Familie der Acryle oder der Polyurethane oder der Silikone ausgewählt ist, einem Dispergiermittel oder Antiflockungsmittel vom Typ Polycarbonsäuresalz, einem Weichmacher und Haftverstärker vom Typ Sulfonamid und einem Lösungsmittel, das aus der Familie der Glykole oder Ester ausgewählt ist.

5. Verkleidungselement nach einem der Ansprüche 1 bis 4, **dadurch gekennzeichnet, dass** die Schutzschicht (12) aus der Liste ausgewählt ist, die umfasst: Saphirglas, mit Nanodiamant und Graphen angereichertes Acrylglas, eine Nanodiamant-Dünnschicht und einen mit Nanodiamant- und Graphenanreicherungen angereicherten Acryllack.

6. Verkleidungselement nach einem der Ansprüche 1 bis 5, **dadurch gekennzeichnet, dass** die Schutzschicht (12) eine Wärmeleitfähigkeit von mindestens größer als 10 W.m⁻¹.K⁻¹ aufweist.

7. Verkleidungselement nach Anspruch 2, **dadurch gekennzeichnet, dass** die Trägerschicht (13) eine spezifische Wärmeleitfähigkeit aufweist, die größer als 100 W.m-1.K-1 ist.

8. Verkleidungselement nach Anspruch 1, **dadurch gekennzeichnet, dass** die Trägerschicht (13) aus einem Material gebildet ist, das aus der Liste gewählt ist, die umfasst: eloxiertes Aluminium, Kupfer, Goldlegierungen, Silberlegierungen, Aluminium-/Siliziumkarbid-Legierungen, Nanodiamant-Dünnschichten, Graphit-Dünnschichten und Graphen.

9. Verkleidungselement nach einem der vorhergehenden Ansprüche, **dadurch gekennzeichnet, dass** es ferner ein Substrat (14) umfasst, auf dem die verschiedenen Schichten angeordnet sind, um einen Einsatz zu bilden.

10. Verkleidungselement nach einem der vorhergehenden Ansprüche, **dadurch gekennzeichnet, dass** es ferner mindestens eine Zwischenschicht (16) umfasst, die unter der thermochromen Schicht angeordnet ist.

11. Verkleidungselement nach einem der vorhergehenden Ansprüche, **dadurch gekennzeichnet, dass** die Zwischenschicht (16) eine lumineszierende Schicht ist.

12. Verkleidungselement nach Anspruch 1, **dadurch gekennzeichnet, dass** alle thermochromen Elemente (10) die gleiche erste Farbe haben.

13. Verkleidungselement nach Anspruch 1, **dadurch gekennzeichnet, dass** alle thermochromen Elemente (10) die gleiche zweite Farbe haben.

14. Verkleidungselement nach Anspruch 1, **dadurch gekennzeichnet, dass** die thermochromen Elemente (10) so gestaltet sind, dass ihre zweite Farbe einen Verlauf zulässt, wenn sie alle von der ersten Farbe zu der zweiten Farbe gewechselt haben.

15. Verkleidungselement nach einem der Ansprüche 1 bis 14, **dadurch gekennzeichnet, dass** es mindestens eine Aussparung (15) aufweist, die so angeordnet ist, dass darin mindestens ein thermochromes Element (10) platzierbar ist.

16. Tragbarer Gegenstand, umfassend ein Gehäuse (102), das durch einen durch einen Boden (106) und ein Glas (108) verschlossenen Gehäusemittelteil (104) gebildet ist, wobei der tragbare Gegenstand ferner ein Armband (110) umfasst, **dadurch gekennzeichnet, dass** er ferner mindestens ein Verkleidungselement nach einem der Ansprüche 1 bis 15 umfasst, das aus der Liste ausgewählt ist, die den Gehäusemittelteil, das Glas, die Lünette, das Zifferblatt, das Armband und die Schließe umfasst.

## Claims

1. An external element (10) of a wearable object (100) comprising a supporting structure made of a first material, said external element furthermore comprising at least one device (200) that reacts to temperature variations, **characterised in that** said device that reacts to temperature variations being formed from at least one thermochromic element that comprises a thermochromic layer (11) that is composed of a binder and of a thermochromic pigment that is chosen to react at a specific temperature so that said pigment passes from a first color to a second color when said specific temperature is reached, the thermochromic element furthermore comprising a carrier layer (13) on which the thermochromic layer (11) is deposited and a protective layer (12) that is resistant to ultraviolet radiation and that covers the thermochromic layer and the carrier layer, the device reacting to temperature variations (200) is a temperature sensor provided with a plurality of thermochromic elements, each thermochromic element reacting at a specific temperature of its own.

2. The external element as claimed in claim 1, **characterised in that** the thermochromic layer (11) is a hard lacquer consisting of: a binder with which the pigment is mixed, this binder being chosen from the family of the acrylics, of the acrylic copolymers or of the polyurethanes; a dispersant of the polycarboxylic-acid-salt type; a Plasticizer of the benzoate type; and a solvent chosen from the family of the glycols or esters.

3. The external element as claimed in claim 1, **characterised in that** the thermochromic layer (11) is a soft lacquer consisting of a binder with which the pigment is mixed, said binder being chosen from the family of the silicones or of the polyurethanes.

4. The external element as claimed in claim 1, **characterised in that** the thermochromic layer (11) is an ink consisting of a binder chosen from the family of the acrylics or of the polyurethanes or of the silicones, of a dispersant or defloculator of the polycarboxylic-acid-salt type, of a Plasticizer and adhesion promoter of sulfonamide type and of a solvent chosen from the family of the glycols or esters.

5. The external element as claimed in one of claims 1 to 4, **characterised in that** the protective layer (12) is chosen from the list comprising: sapphire glass, acrylic glass filled with nanodiamonds and graphene, a thin nanodiamond layer, and an acrylic lacquer filled with nanodiamond and graphene fillers.

6. The external element as claimed in one of claims 1 to 5, **characterised in that** the protective layer (12) has a thermal conductivity at least higher than 10 W.m⁻¹.K⁻¹.

7. The external element as claimed in claim 2, **characterised in that** the carrier layer (13) has a thermal conductivity higher than 100 W.m⁻¹.K⁻¹.

8. The external element as claimed in claim 1, **characterised in that** the carrier layer (13) is made from a material chosen from the list comprising: anodised aluminium, copper, gold alloys, silver alloys, aluminium/silicon carbide alloys, thin layers of nanodiamonds, thin layers of graphite, and graphene.

9. The external element as claimed in one of the preceding claims, **characterised in that** it furthermore comprises a substrate (14) on which the various layers are placed in order to form an insert.

10. The external element as claimed in one of the preceding claims, **characterised in that** it furthermore comprises at least one intermediate layer (16) arranged under the thermochromic layer.

11. The external element as claimed in one of the preceding claims, **characterised in that** the intermediate layer (16) is a luminescent layer.

12. The external element as claimed in claim 1, **characterised in that** said thermochromic elements (10) all have the same first color.

13. The external element as claimed in claim 1, **characterised in that** said thermochromic elements (10) all have the same second color.

14. The external element as claimed in claim 1, **characterised in that** said thermochromic elements (10) are designed so that their second color allows a gradation when they have all passed from the first color to the second color.

15. The external element as claimed in one of claims 1 to 14, **characterised in that** it comprises at least one recess (15) arranged so that at least one thermochromic element (10) can be placed therein.

16. A wearable object comprising a case (102) formed by a middle (104) closed by a back (106) and a glass (108), said wearable object also comprising a strap (110), **characterised in that** it furthermore comprises at least one external element according to one of claims 1 to 15 chosen from the list comprising the middle, the glass, the bezel, the dial, the strap, and the clasp.
